(19) Europäisches Patentamt
European Patent Office
Office européen des brevets

(11) **EP 3 423 792 B1**

(12) **EUROPÄISCHE PATENTSCHRIFT**

(45) Veröffentlichungstag und Bekanntmachung des Hinweises auf die Patenterteilung:
**26.05.2021   Patentblatt 2021/21**

(21) Anmeldenummer: **17712925.1**

(22) Anmeldetag: **28.02.2017**

(51) Int Cl.:
***G01D 5/20*** *(2006.01)*

(86) Internationale Anmeldenummer:
**PCT/EP2017/054598**

(87) Internationale Veröffentlichungsnummer:
**WO 2017/148917 (08.09.2017 Gazette 2017/36)**

(54) **DREHWINKELSENSOR**

ANGULAR POSITION SENSOR

CAPTEUR D'ANGLE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.02.2016   DE 102016203234**

(43) Veröffentlichungstag der Anmeldung:
**09.01.2019   Patentblatt 2019/02**

(73) Patentinhaber: **Robert Bosch GmbH**
**70442 Stuttgart (DE)**

(72) Erfinder:
• **UTERMOEHLEN, Fabian**
**71229 Leonberg (DE)**
• **MERZ, Andreas**
**71691 Freiberg Am Neckar (DE)**
• **LEIDICH, Stefan**
**71277 Rutesheim (DE)**

(56) Entgegenhaltungen:
**EP-A2- 2 570 776          DE-A1-102008 012 922**
**US-A1- 2009 153 344**

EP 3 423 792 B1

**Beschreibung**

Gebiet der Erfindung

Die Erfindung betrifft einen Drehwinkelsensor, mit dem beispielsweise ein Drehwinkel zwischen einer Welle und einem weiteren Bauteil bestimmt werden kann.

Stand der Technik

Um Drehwinkel zu messen, sind beispielsweise Drehwinkelsensoren bekannt, bei denen ein Magnet über einen entsprechenden Magnetfeldsensor gedreht wird. Die Messung des Magnetfeldvektors erlaubt dann einen Rückschluss auf den Drehwinkel. Derartige Sensoren reagieren auch auf externe Magnetfelder, die beispielsweise durch einen Stromfluss von benachbart angeordneten Stromkabeln verursacht werden und können sehr störempfindlich sein.
Ein weiterer Typ Drehwinkelsensor nutzt einen Wirbelstromeffekt aus. Dabei wird beispielsweise ein metallisches Target über Sensorspulen bewegt, die mit einer Wechselspannung versorgt werden und in dem Target einen Wirbelstrom induzieren. Dies führt zur Reduzierung der Induktivitäten der Sensorspulen und erlaubt, über eine Frequenzänderung auf den Drehwinkel zu schließen. Beispielsweise sind die Spulen Bestandteil eines Schwingkreises, dessen Resonanzfrequenz sich bei einer Veränderung der Induktivität verschiebt. Dieser Typ von Drehwinkelsensor kann jedoch eine hohe Querempfindlichkeit gegenüber Einbautoleranzen (vor allem ein Verkippen des Targets) aufweisen. Auch kann die erzeugte Frequenz durch externe elektromagnetische Felder gestört werden (Injection Locking), da üblicherweise mit Frequenzen im Bereich von einigen zehn MHz gearbeitet wird.
Die EP 0 909 955 B1 zeigt einen Drehwinkelsensor mit auf einem Target kurzgeschlossenen planaren Leiterschleifen, die mit dem elektromagnetischen Wechselfeld einer Erregerspule wechselwirken.
Aus der DE 10 2008 012 922 A1 ist ein induktiver Winkelsensor bekannt.
Aus der EP 2 570 776 A2 sind ein induktiver Messgeber und ein Digital-Mikrometer bekannt.
Aus der US 2009/0153344 A1 ist ein induktiver Positionssensor bekannt.

Offenbarung der Erfindung

Vorteile der Erfindung

Ausführungsformen der vorliegenden Erfindung können in vorteilhafter Weise ermöglichen, einen Drehwinkelsensor bereitzustellen, der besonders ökonomisch herzustellen ist, wobei er einfach auszuwertende Messsignale liefert.
Ideen zu Ausführungsformen der vorliegenden Erfindung können unter anderem als auf den nachfolgend beschriebenen Gedanken und Erkenntnissen beruhend angesehen werden.
Die Erfindung betrifft einen Drehwinkelsensor, der insbesondere in einer Umgebung mit hohen elektromagnetischen Störfeldern eingesetzt werden kann. Beispielsweise kann der Drehwinkelsensor im Motorraum oder in der Nähe des Motorraums eines Fahrzeugs verwendet werden, beispielsweise zur Bestimmung einer Position einer Drosselklappe, einer Rotorposition eines BLDC-Motors, einer Position eines Fahrpedals oder einer Position einer Nockenwelle. Der im Folgenden beschriebene Drehwinkelsensor ist kostengünstig, benötigt einen geringen Bauraum und basiert auf einem einfachen Messprinzip.
Gemäß einer Ausführungsform der Erfindung umfasst der Drehwinkelsensor ein Statorelement mit einer Statorsendespule und einer Statorempfangsspule; ein bezüglich des Statorelements um eine Drehachse drehbar gelagertes Rotorelement mit einer Rotorempfangsspule und einer Rotorsendespule, die miteinander elektrisch verbunden sind; wobei die Rotorempfangsspule mit der Statorsendespule induktiv gekoppelt ist, so dass ein durch die Statorsendespule erzeugtes elektromagnetisches Feld in der Rotorempfangsspule einen Strom induziert, der durch die Rotorsendespule fließt, so dass die Rotorsendespule ein weiteres elektromagnetisches Feld erzeugt; wobei die Statorempfangsspule mit der Rotorsendespule induktiv gekoppelt ist, so dass die induktive Kopplung von einem Drehwinkel zwischen dem Statorelement und dem Rotorelement abhängig ist, und das von der Rotorsendespule erzeugte weitere elektromagnetische Feld in der Statorempfangsspule eine winkelabhängige Wechselspannung induziert.
Beispielsweise kann die, z.B. auf einer Stator-Leiterplatte angeordnete, Statorsendespule mit einer Wechselspannung beaufschlagt werden, die eine Frequenz im Bereich einiger MHz (bevorzugt 5 MHz) aufweist. Dadurch entsteht ein elektromagnetisches Wechselfeld, welches in die Rotorempfangsspule koppelt und dort eine entsprechende Wechselspannung induziert. In Reihe zu der Rotorempfangsspule ist eine Rotorsendespule geschaltet, die erneut ein elektromagnetisches Wechselfeld erzeugt und auf das Statorelement zurückstrahlt, wo es in einer oder mehreren Statorempfangsspulen, die z.B. auch auf der Stator-Leiterplatte angeordnet sein können, eine winkelabhängige Wechselspannung induziert. Insgesamt wird eine Kopplung zwischen der Statorsendespule und der einen oder mehreren Statorempfangsspulen drehwinkelabhängig beeinflusst. Der typische Wertebereich des Kopplungsfaktors liegt zwischen -0,3 und +0,3. Durch Demodulation des in der oder den Statorempfangsspulen induzierten Signals mit dem Trägersignal (dem Signal der Statorsendespule) kann auf Betrag und Phase der Kopplung geschlossen werden. Dieser Betrag kann kontinuierlich mit dem Drehwinkel variieren. Die Phasenlage der Kopplung kann idealerweise 0° oder 180° betragen.

Sind die Rotorsendespule und die Statorempfangsspulen derart ausgeführt, dass sie jeweils im Wesentlichen sinusförmige Signale erzeugen, kann auf besonders einfache Art und Weise der Drehwinkel aus diesen Signalen bestimmt werden. Bei Verwendung von zwei Empfangsspulen mit 90° Phasenversatz bezogen auf den Messbereich können durch Multiplikation des Betrags mit dem Kosinus der Phase die beiden Messsignale in ein (idealerweise) offsetfreies Sin/Cos-System überführt werden. Bei Verwendung von drei Empfangsspulen mit 120° Phasenversatz bezogen auf den Messbereich entsteht ein dreiphasiges Sinussignal, welches durch Anwendung einer Clarke-Transformation in ein Sin/Cos-System überführt werden kann. Durch Anwenden der Arctan-Funktion auf das transformierte Signal im Sin/Cos-System kann dann in beiden Fällen auf den Drehwinkel geschlossen werden.

Weiter weist die Statorsendespule eine kreisförmige äußere Teilwindung und eine kreisförmige innere Teilwindung auf, die innerhalb der äußeren Teilwindung angeordnet ist und die mit der äußeren Teilwindung derart elektrisch verbunden ist, dass sie bezüglich eines Stromflusses zur äußeren Teilwindung gegenläufig orientiert ist. Die Rotorempfangsspule weist eine kreisförmige äußere Teilwindung und eine kreisförmige innere Teilwindung auf, die innerhalb der äußeren Teilwindung angeordnet ist und die mit der äußeren Teilwindung derart elektrisch verbunden ist, dass sie bezüglich eines Stromflusses zur äußeren Teilwindung gegenläufig orientiert ist. Mit anderen Worten weisen sowohl die Statorsendespule als auch die Rotorempfangspule jeweils zwei Teilwindungen auf, die ineinander angeordnet sind und die gegenläufig orientiert sind. Bezüglich eines Stromflusses können gegenläufig orientierte Teilwindungen dabei so ausgelegt sein, dass bei einem Stromfluss durch die zugehörige Spule die Teilwindungen jeweils linksherum bzw. rechtsherum von dem Strom durchflossen werden. Eine Teilwindung einer Spule kann ein Leiterabschnitt der Spule sein, der die gleiche oder im Wesentlichen die gleiche Fläche umläuft. Die beiden Teilwindungen der Statorsendespule und/oder der Rotorempfangsspule können in Reihe geschaltet sein.

Die äußere Teilwindung der Statorsendespule und die äußere Teilwindung der Rotorempfangsspule sind zueinander ausgerichtet und die innere Teilwindung der Statorsendespule und die innere Teilwindung der Rotorempfangsspule sind zueinander ausgerichtet. Zueinander ausgerichtet kann dabei bedeuten, dass sich die jeweiligen Teilwindungen mit Blick auf die Drehachse bzw. eine Symmetrieachse des Statorelements im Wesentlichen überdecken.

Mit den gegenläufig orientierten Teilwindungen kann eine Anfälligkeit des Drehwinkelsensors gegenüber im Wesentlichen homogenen elektromagnetischen Wechselfeldern reduziert werden. Werden die Statorsendespule und/oder die Rotorempfangsspule von diesen Feldern durchflutet, kommt es zu einer induzierten Spannung in jeder der Teilwindungen, die sich aber gegenseitig aufheben oder zumindest reduzieren.

Insgesamt kann ein Drehwinkelsensor basierend auf diesem einfachen Messprinzip kostengünstig ausgeführt werden, da kein teurer Magnet benötigt wird. Die entstehenden Messsignale können mit einer einfachen Rücktransformation (basierend auf einer Clarke-Transformation) ausgewertet werden. Weiter ist der Drehwinkelsensor toleranzrobust, d.h. beim Einbau können größere mechanische Toleranzen zugelassen werden, und besonders unanfällig gegenüber externen Störfeldern.

Gemäß einer Ausführungsform der Erfindung sind die äußere Teilwindung und die innere Teilwindung der Statorsendespule derart ausgeführt, dass sie im Wesentlichen den gleichen magnetischen Fluss erzeugen. Gemäß einer Ausführungsform der Erfindung sind die äußere Teilwindung und die innere Teilwindung der Rotorempfangsspule derart ausgeführt, dass sie im Wesentlichen den gleichen magnetischen Fluss erzeugen. Die Statorsendespule und/oder die Rotorempfangsspule können so ausgeführt sein (in etwa durch eine Wahl der Anzahl der Leiterschleifen der jeweiligen Teilwindung), dass ihre jeweiligen Teilwindungen den gleichen magnetischen Fluss erzeugen, wenn sie von Strom durchflossen werden (der in den Teilwindungen der gleichen Spule gleich groß ist, da die Teilwindungen in Reihe geschaltet sind). Da die Teilwindungen gegenläufig orientiert sind, heben sich dann durch externe Magnetfelder induzierte Spannungen in einer Spule im Wesentlichen komplett auf. Dies gilt z.B. insbesondere für im Bereich der Spulen homogene externe Magnetfelder.

Im Vorigen und im Folgenden kann "im Wesentlichen" bzw. "in etwa" eine maximale Abweichung von 5% bzw. von 1% bedeuten.

Gemäß einer Ausführungsform der Erfindung weisen die äußere Teilwindung der Statorsendespule und/oder der Rotorempfangsspule eine Mehrzahl von Leiterschleifen auf, die jeweils das Statorelement komplett umrunden. Gemäß einer Ausführungsform der Erfindung weisen die inneren Teilwindungen der Statorsendespule und/oder der Rotorempfangsspule eine Mehrzahl von Leiterschleifen auf, die jeweils das Statorelement komplett umrunden. Die Leiterschleifen können beispielsweise auf Leiterbahnen auf der Stator-Leiterplatte basieren. Diese Leiterschleifen bzw. Leiterbahnen können spiralförmig verlaufen. "Komplett umrunden" kann dabei bedeuten, dass eine Leiterschleife die Drehachse des Rotorelements bzw. die Symmetrieachse des Statorelements um in etwa 360° umläuft. Diejenigen Leiterschleifen, an denen die Anschlüsse angebracht sind, können das Statorelement bzw. das Rotorelement auch (im Sinne der Anmeldung) komplett umrunden, falls die Anschlussleitungen eng beieinander liegen.

Gemäß einer Ausführungsform der Erfindung entspricht eine effektive Fläche der äußeren Teilwindung der Statorsendespule, die einer Summe der von deren Leiterschleifen aufgespannten Flächen entspricht, im Wesentlichen einer effektiven Fläche der inneren Teilwindung der Statorsendespule: Gemäß einer Ausführungsform der Erfindung entspricht eine effektive Fläche der äußeren Teilwindung der Rotorempfangsspule, die einer Summe der von deren Leiterschleifen aufgespannten Flächen entspricht, im Wesentlichen einer effektiven Fläche der inneren Teilwindung der Rotorempfangsspule: Die effektive Fläche einer Spule kann dabei den magnetischen Fluss durch die Spule bestimmen, der das Produkt aus der effektiven Fläche der Spule und der Stromstärke sein kann. Jede Leiterschleife kann nach einer kompletten Umrundung eine eigene Fläche bilden, zu der dann für die nächste Leiterschleife nach einer weiteren kompletten Umrundung die weitere umschlossene Fläche hinzugezählt wird.

Gemäß einer Ausführungsform der Erfindung weist die äußere Teilwindung der Statorsendespule und/oder der Rotorempfangsspule eine Mehrzahl von Leiterschleifen auf, die, insbesondere um eine Symmetrieachse des Statorelements bzw. die Drehachse betrachtet, eine Spirale bilden. Gemäß einer Ausführungsform der Erfindung weist die innere Teilwindung der Statorsendespule und/oder der Rotorempfangsspule eine Mehrzahl von Leiterschleifen auf, die, insbesondere um eine Symmetrieachse des Statorelements bzw. die Drehachse betrachtet, eine Spirale bilden. Eine Spirale kann dabei eine Kurve sein, deren Abstand zu der Drehachse bzw. der Symmetrieachse kontinuierlich zunimmt.

Gemäß einer Ausführungsform der Erfindung sind die äußere Teilwindung und die innere Teilwindung der Statorsendespule und/oder der Rotorempfangsspule konzentrisch zu einer/der Symmetrieachse der Statorsendespule bzw. der Drehachse angeordnet. Auf diese Weise überdecken sich die Teilwindungen des Statorelement und des Rotorelements gleich bzw. sind immer gleich zueinander ausgerichtet, unabhängig vom Drehwinkel.

Gemäß einer Ausführungsform der Erfindung sind die Statorsendespule und/oder die Rotorempfangsspule als planare Spulen in der Form von Leiterbahnen auf einer Stator-Leiterplatte bzw. einer Rotor-Leiterplatte ausgeführt. Es ist möglich, dass Leiterbahnen der Teilwindungen und/oder der Spulen in mehreren Ebenen der jeweiligen Leiterplatte angeordnet sind. Es ist auch möglich, dass eine Teilwindung als eine (einzige Leiterbahn) in lediglich einer Ebene der zugehörigen Leiterplatte ausgeführt ist.

Gemäß einer Ausführungsform der Erfindung sind die eine oder mehreren Statorempfangsspulen in einem Senderingbereich des Statorelements angeordnet, der radial außen von der äußeren Teilwindung und radial innen von der inneren Teilwindung der Statorsendespule begrenzt ist. Somit werden die eine oder mehreren Statorempfangsspulen nur von dem magnetischen Fluss durchdrungen, der von den beiden Teilwindungen der Statorsendespule und/oder der Rotorsendespule gleichzeitig erzeugt wird. Auch die bzw. jede der Statorempfangsspulen kann eine Mehrzahl von bezüglich eines Stromflusses gegenläufig orientierten Teilwindungen aufweisen.

Gemäß einer Ausführungsform der Erfindung ist die Rotorsendespule in einem Ringbereich des Rotorelements angeordnet, der radial außen von der äußeren Teilwindung und radial innen von der inneren Teilwindung begrenzt ist. Auch die Rotorsendespule kann eine Mehrzahl von bezüglich eines Stromflusses gegenläufig orientierten Teilwindungen aufweisen.

Gemäß einer Ausführungsform der Erfindung überdeckt die Statorempfangsspule einen Empfangsringbereich (innerhalb des Senderingbereichs) komplett, wobei die Rotorsendespule eine Mehrzahl von sichelförmigen Teilwindungen aufweist, die dem Empfangsringbereich gegenüberliegen. Damit kann erreicht werden, dass das von den Statorempfangsspulen erzeugte Messsignal (d.h. die Amplitude der induzierten Wechselspannung) im Wesentlichen sinusförmig vom Drehwinkel abhängt, wodurch das oder die Messsignale besonders einfach ausgewertet werden können.

Ein weiterer Aspekt der Erfindung betrifft ein Statorelement und/oder ein Rotorelement für einen Drehwinkelsensor, so wie sie obenstehend und untenstehend beschrieben ist.

Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1 zeigt schematisch einen Querschnitt durch einen Drehwinkelsensor gemäß einer Ausführungsform der Erfindung.

Fig. 2 zeigt schematisch eine Draufsicht auf eine Statorsendespule für ein Statorelement gemäß einer Ausführungsform der Erfindung.

Fig. 3 zeigt schematisch die Geometrie einer Statorempfangsspule eines Statorelements gemäß einer Ausführungsform der Erfindung.

Fig. 4 zeigt ein Spulenlayout für ein Statorelement gemäß einer Ausführungsform der Erfindung.

Fig. 5 zeigt schematisch die Geometrie einer Statorempfangsspule eines Drehwinkelsensors gemäß einer Ausführungsform der Erfindung.

Fig. 6 zeigt ein Spulenlayout für ein Statorelement gemäß einer Ausführungsform der Erfindung.

Fig. 7 zeigt ein Spulenlayout für ein Rotorelement gemäß einer Ausführungsform der Erfindung.

Fig. 8 zeigt ein Spulenlayout für ein Rotorelement gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

Ausführungsformen der Erfindung

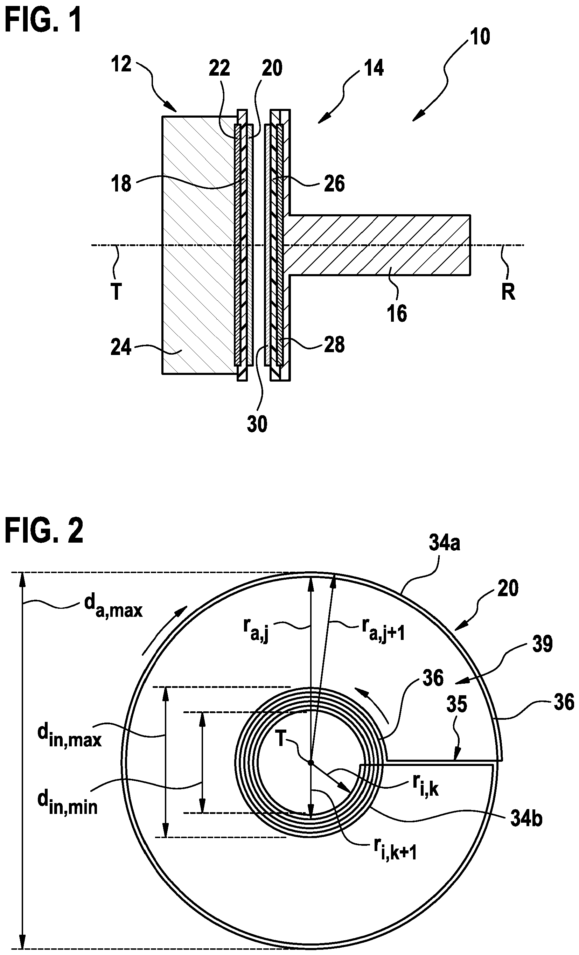

Fig. 1 zeigt einen Drehwinkelsensor 10 aus einem Statorelement 12 und einem Rotorelement 14. Das Rotorelement 14 kann auf einer Welle 16 eines Bauteils, wie etwa einer Drosselklappe, einem Motor, einer Nockenwelle, eines Fahrpedals usw., befestigt sein oder von dieser Welle 16 bereitgestellt werden. Die Welle 16 ist um die Drehachse R drehbar und das Statorelement 12 liegt dem Rotorelement 14 in der entsprechenden axialen Richtung gegenüber. Beispielsweise ist das Statorelement 12 an einem Gehäuse des Bauteils befestigt. Wenn das Statorelement 12 gegenüber der Welle 16 exakt ausgerichtet ist, stimmt die Symmetrieachse T des Statorelements 12 mit der Drehachse R überein.
Das Statorelement 12 umfasst eine Stator-Leiterplatte 18, auf der eine Statorsendespule 20 und eine oder mehrere Statorempfangsspulen 22 angeordnet sind. Die Leiter der Spulen 20, 22 können lediglich in zwei Ebenen, beispielsweise auf den beiden Seiten der Stator-Leiterplatte 18, angeordnet sein. Auf der Stator-Leiterplatte 18 können sich weitere Bauelemente für eine Steuereinheit 24 befinden. Die Steuereinheit 24 kann die Statorsendespule 20 mit einer Wechselspannung (beispielsweise mit einer Frequenz zwischen 1 MHz und 20 MHz, beispielsweise 5 MHz, und/oder mit einer Spannungsamplitude im Bereich von 0,5 V bis 10 V, beispielsweise 1,5 V) versorgen und in jeder Statorempfangsspule 22 eine induzierte Wechselspannung ermitteln. Basierend auf diesen Messungen kann die Steuereinheit 24 einen relativen Drehwinkel zwischen dem Statorelement 12 und dem Rotorelement 14 bestimmen.
Das Rotorelement 14 umfasst eine Rotor-Leiterplatte 26. Auf der Rotor-Leiterplatte 26 sind eine Rotorempfangsspule 28 und eine Rotorsendespule 30 angeordnet. Die Leiter der Spulen 28, 30 können in lediglich zwei Ebenen der Rotor-Leiterplatte 26, beispielsweise auf den beiden Seiten der Rotor-Leiterplatte 26, angeordnet sein.
Alle Spulen 20, 22, 28, 30 sind als Planarspulen ausgeführt, d.h. als Spulen, die mittels Leiterbahnen auf und/oder in einer der Leiterplatten 18, 26 ausgeführt sind.
Die Fig. 2 zeigt die Statorsendespule 20, die eine äußere Teilwindung 34a und eine innere Teilwindung 34b umfasst, die über radial verlaufenden Leiterbahnen 35 in Reihe geschaltet sind. Es ist zu verstehen, dass die äußere Teilwindung 34a der Statorsendespule 20 (über nicht dargestellte Anschlüsse) mit der Steuerung 24 verbunden sein kann. Die äußere Teilwindung 34a und die innere Teilwindung 34b sind bezüglich des Stromflusses gegensätzlich orientiert, d.h., wie durch die Pfeile angedeutet, fließt der Strom in der äußeren Teilwindung 34a nach rechts, wenn er in der inneren Teilwindung 34b nach links fließt.
Sowohl die äußere Teilwindung 34a als auch die innere Teilwindung 34b sind ringförmig und aus einer Mehrzahl von nahezu kreisförmigen Leiterschleifen 36 aufgebaut, die die Symmetrieachse T komplett umrunden. Die Leiterschleifen 36 bilden dabei jeweils eine Spirale um die Symmetrieachse T.
Die äußere Teilwindung 34a und die innere Teilwindung 34b sind so ausgeführt, dass sie den gleichen magnetischen Fluss erzeugen bzw. dass sich Spannungen, die durch ein homogenes Magnetfeld in den Teilwindungen 34a, 34b induziert werden, durch die Reihenschaltung der Teilwindungen 34a, 34b gegenseitig aufheben.
Dies kann dadurch erreicht werden, dass die effektiven Flächen der Teilwindungen 34a, 34b gleich groß sind. Die effektive Fläche einer Teilwindung 34a, 34b ist dabei die Summe der Flächen, die von den Leiterschleifen 36 aufgespannt werden.
Unter der Annahme, dass jede der Leiterschleifen nahezu kreisförmig ist, kann jeder Leiterschleife 36 eine Kreisfläche zugeordnet werden. Die Summe aller dieser Kreisflächen der inneren Teilwindung 34b sollte dann gleich der Summe aller Kreisflächen der äußeren Teilwindung 34a sein.
Wenn nun $r_{a,j}$ und $r_{a,j+1}$ die (durchschnittlichen) Radien der Leiterschleifen 36 der äußeren Teilwindung 34a und $r_{a,k}$ und $r_{a,k+1}$ die (durchschnittlichen) Radien der Leiterschleifen 36 der inneren Teilwindung 34b sind, gilt, dass

$$\sum_{k=1}^{n} \pi \cdot r_{i,k}^2 = \sum_{j=1}^{m} \pi \cdot r_{a,j}^2. \tag{1}$$

Dabei sind insgesamt n innere Leiterschleifen 36 und m äußere Leiterschleifen 36 vorgesehen.

Wird die äußere Teilwindung 34a als vorgegeben angenommen, kann die Geometrie der inneren Teilwindung 34b wie folgt bestimmt werden. Innerhalb der inneren Teilwindung 34b gibt es eine Fläche, die frei von Spulen-Windungen ist. Diese wird durch einen Innendurchmesser $d_{in,min}$ definiert. Die freibleibende Fläche kann beispielsweise für eine Bohrung zum Durchführen einer Achse oder für andere Schaltungsteile (Bauelemente, Vias etc.) vorgesehen sein. Da in einem Ringbereich 39 zwischen der inneren Teilwindung 34a und der äußeren Teilwindung 34b die eine oder mehreren Statorempfangsspulen 22 untergebracht werden, wird auch ein maximaler Außendurchmesser $d_{in,max}$ für die innere Teilwindung 34b definiert. Dabei gilt $d_{in,min}=2\,r_{in,min}$ sowie $d_{in,max}=2\,r_{m,max}$.

Die dargestellte äußere Teilwindung 34a hat zwei Leiterschleifen 36. Damit ergibt sich die zu kompensierende effektive Fläche zu

$$A_{out} = \sum_{j=1}^{2} \pi \cdot r_{a,j}^2. \qquad (2)$$

Es ist zu verstehen, dass bei 1, 3 oder mehr Leiterschleifen 36 oder auch einer anderen Geometrie eine entsprechende zu kompensierende effektive Fläche gewählt werden kann.

In dem durch $d_{in,min}$ und $d_{in,max}$ vorgegeben Bereich können maximal

$$n_{max} = \frac{d_{in,max} - d_{in,min}}{2 \cdot (w + g)} \qquad (3)$$

Windungen platziert werden. Hierbei bezeichnen w die Leiterbahnbreite und g den Abstand zwischen zwei Leiterbahnen, die die Leiterschleifen 36 bilden.

Nun wird die insgesamt aufgespannte Fläche addiert:

$$A_{in} = \sum_{k=1}^{n_{max}} \pi \cdot \left(\frac{d_{i,k}}{2}\right)^2 \qquad (4)$$

mit

$$d_{i,i} = d_{in,min} + w + 2 \cdot (i - 1) \cdot (w + g). \qquad (5)$$

Sofern $A_{in} \geq A_{out}$, kann die geforderte Bedingung erfüllt werden. Die benötigte Anzahl n an Leiterschleifen 36 wird so gewählt, dass

$$\sum_{k=1}^{n-1} \pi \cdot \left(\frac{d_{i,k}}{2}\right)^2 < A_{out} \qquad (6)$$

und

$$\sum_{k=1}^{n} \pi \cdot \left(\frac{d_{i,k}}{2}\right)^2 \geq A_{out}. \qquad (7)$$

Damit sichergestellt wird, dass die Bedingung $A_{in} = A_{out}$ exakt erfüllt wird, wird anschließend der maximale Innendurchmesser $d_{in,max}$ so lange schrittweise reduziert, bis die Bedingung erfüllt ist.

Sowohl die innere Teilwindung 34b als auch die äußere Teilwindung 34a können als mehrlagige Planarspulen ausgeführt sein. Dabei ist es durchaus möglich, dass die Anzahl der für die innere Teilwindung 34b verwendeten Leiterplatten-Lagen größer ist. Dies reduziert den Flächenbedarf der inneren Teilwindung 34b und erlaubt die Integration von Statorempfangsspulen 22 mit einer möglichst großen Fläche. Dies erzeugt Signale mit großer Amplitude, welche leicht zu bestimmen sind.

Der größte Außendurchmesser $d_{a,max}$ der äußeren Teilwindung 34a beträgt vorzugsweise zwischen 10 mm und 40 mm, bevorzugt 25 mm.

Die Statorsendespule 20 kann mit einer Wechselspannung beaufschlagt werden, die Amplituden im Bereich 0.5 V bis 10 V (bevorzugt 1.5 V) bei Frequenzen im Bereich einiger MHz (bevorzugt 5 MHz) aufweist.

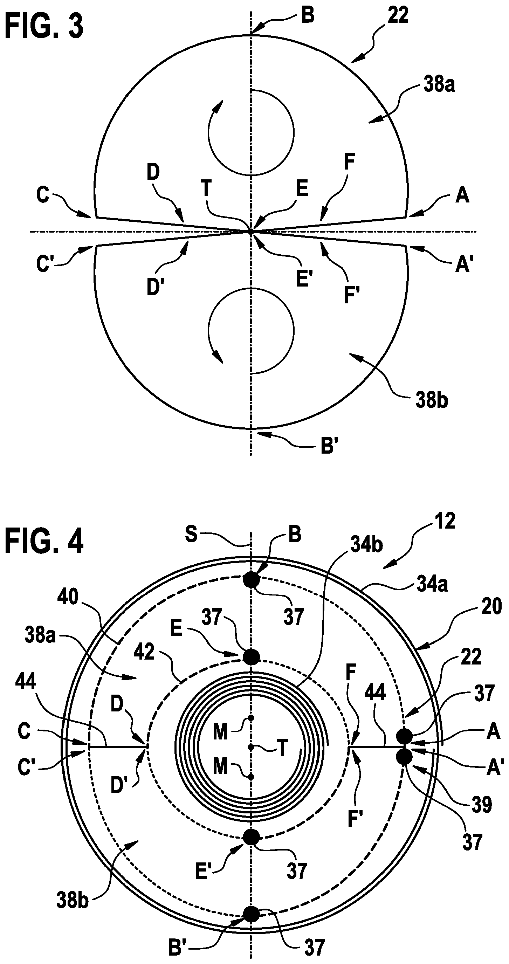

Fig. 3 zeigt die Geometrie einer Statorempfangsspule 22 schematisch, während die Fig. 4 das Spulenlayout eines Statorelements 12 mit einer Statorempfangsspule 22 zeigt. Fig. 3 zeigt lediglich die Form, aber nicht den genauen Verlauf der Leiterbahnen einer Statorempfangsspule 22, während sich in der Fig. 4 Teile der Leiterbahnen überdecken. In der Fig. 4 sind aus Gründen der Übersichtlichkeit die radialen Leiterbahnen 35 der Statorsendespule 20 weggelassen.

Weiter ist in der Fig. 4 lediglich eine Statorempfangsspule 22 dargestellt. Es ist möglich, dass das in der Fig. 4 gezeigte Statorelement 12 zwei um 90° zueinander verschobene oder drei um 120° in Umfangsrichtung zueinander verschobene bzw. verdrehte Statorempfangsspulen 22 umfasst. Diese Statorempfangsspulen 22 können das gleiche Layout wie die gezeigte Statorempfangsspule 22 aufweisen. Prinzipiell sind hier auch andere Spulenanzahlen mit entsprechenden mechanischen Verdrehungen möglich.

Bei der gezeigten Statorempfangsspule 22 liegen im Bereich der durchgezogenen Linien zwei Leiterbahnen in zwei Ebenen übereinander. Ansonsten stellt jeder Strichtyp eine Ebene/Lage der Stator-Leiterplatte 18 dar. Die ausgefüllten Kreise sind Vias, die beide Ebenen miteinander verbinden.

Wie aus den Fig. 3 und 4 zu erkennen ist, weist die Statorempfangsspule 22 zwei gegenläufige bzw. bezüglich des Stromflusses gegensätzlich orientierte Teilwindungen 38a, 38b auf.

Im Allgemeinen gilt, dass jede der Statorempfangsspulen 22 eine geradzahlige Anzahl 2m an Teilwindungen 38a, 38b aufweisen kann und dass der Messbereich *Per* des Drehwinkelsensors 10, der beispielsweise ein ganzteiliger Teiler von 360° sein kann, von der Anzahl 2m der Teilwindungen 38a, 38b jeder Statorempfangsspule 22 abhängt, wobei m=360°/Per gilt.

Beispielsweise weisen mit m = 1 die Statorempfangsspulen 22 aus den Fig. 2 und 3 zwei Teilwindungen 38a, 38b auf, was zu einer Periodizität bzw. einem Messbereich von 360° führt.

Die gleiche Anzahl an in die eine Richtung und an in die andere Richtung orientierten Teilwindungen 38a, 38b führt dazu, dass sich die durch die Statorsendespule 20 induzierten Teilspannungen (bei fehlendem Rotorelement 14) in Summe kompensieren und als Ausgangssignal 0 V an allen Statorempfangsspulen 22 ausgegeben wird. Diese kann auch zur Eigendiagnose verwendet werden, wobei erkannt werden kann, dass das Rotorelement 14 fehlt oder zumindest eine elektrische Unterbrechung aufweist. Außerdem induzieren Störungen infolge von EMV-Einflüssen in jeder Teilwindung 38a, 38b Spannungen unterschiedlichen Vorzeichens (analog der Teilwindungen 34a, 34b der Statorsendespule 20), die sich durch die Reihenschaltung der Teilwindungen 38a, 38b wieder kompensieren (unter der Annahme, dass die Störungen im Bereich der Teilwindungen homogen sind).

In dem Statorelement 12 können beispielsweise drei Statorempfangsspulen 22 zueinander um einen Winkel $\xi$ verdreht sein, der sich gemäß $\xi$ =*Per*/ 3 berechnen lässt (hier beispielsweise 120°, da Per=360°). Bei dieser Verdrehung ergibt sich ein dreiphasiges elektrisches System, welches einen elektrischen Phasenversatz von 120° aufweist.

Wie aus der Fig. 4 hervorgeht, ist jede der Teilwindungen 38a, 38b von einem radial außen liegenden Umfangsleiter 40 und einem radial innen liegenden Umfangsleiter 42 begrenzt, die jeweils von zwei Radialleitern 44 miteinander verbunden werden. In der Fig. 4 sind lediglich zwei der vier Radialleiter 44 zu erkennen, da jeweils zwei Radialleiter 44 sich überdeckend übereinander in den beiden Ebenen der Stator-Leiterplatte 18 verlaufen.

Der äußere Umfangsleiter 40 der ersten Teilwindung 38a startet am Punkt A (auch in der Fig. 3 dargestellt) bei einer Durchkontaktierung 37 und verläuft dann in der ersten Ebene bis zum Punkt B in seiner Mitte, wo er bei einer weiteren Durchkontaktierung die Ebene wechselt. Anschließend verläuft er in der zweiten Ebene bis zum Punkt C. Am Punkt C ist der äußere Umfangsleiter 40, der hier in der zweiten Ebene verläuft, mit einem Radialleiter 44 verbunden, der in der zweiten Ebene bis zum Punkt D verläuft und dort in den inneren Umfangsleiter 42 der ersten Teilwindung 38a übergeht. Der innere Umfangsleiter 42 der ersten Teilwindung 38a verläuft vom Punkt D bis zum Punkt E in der zweiten Ebene, wechselt am Punkt E über eine Durchkontaktierung 37 in die erste Ebene und verläuft dann in der ersten Ebene bis zum Punkt F, wo er in einen weiteren Radialleiter 44 übergeht. Der weitere Radialleiter 44 der ersten Teilwindung 38a verläuft dann bis zum Punkt A', an dem die zweite Teilwindung 38b beginnt. Diese ist entlang der Punkte A' bis F' genauso wie die Teilwindung 38a aufgebaut, nur dass die beiden Ebenen der Stator-Leiterplatte 18 vertauscht sind.

Wie weiter unten noch genauer beschrieben wird, verlaufen die äußeren Umfangsleiter 40 auf Kreisen, deren Mittelpunkte M derart von der Symmetrieachse T verschoben sind, dass die Punkte B, bei denen eine Durchkontaktierung 37 vorhanden ist, maximalen radialen Abstand haben. Die inneren Umfangsleiter 42 verlaufen rechts und links der jeweiligen Durchkontaktierung 37 auch auf Kreisen, deren Mittelpunkte (aus Gründen der Übersichtlichkeit nicht dargestellt) von der Symmetrieachse T verschoben sind, jedoch so, dass die jeweiligen Durchkontaktierungen 37 minimalen radialen Abstand haben.

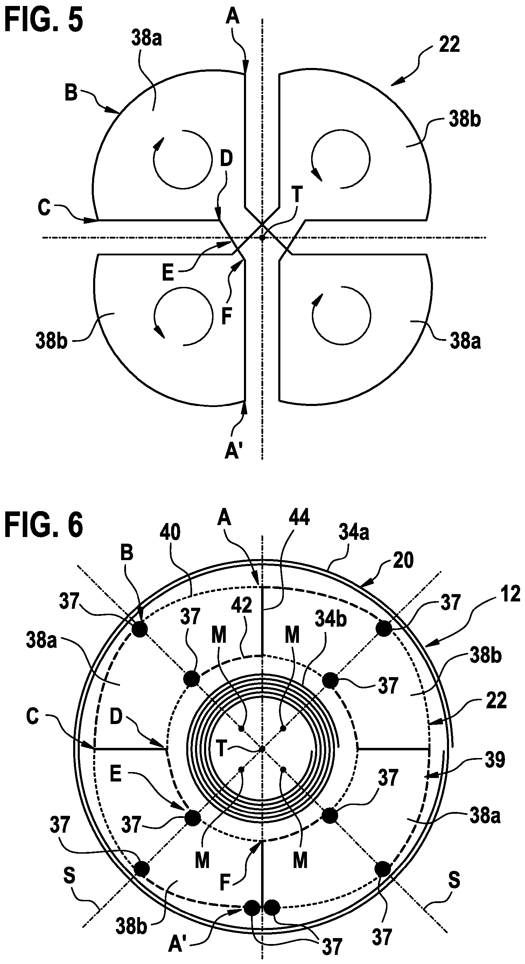

Fig. 5 und Fig. 6 zeigen aus Übersichtlichkeitsgründen jeweils nur genau eine Statorempfangsspule 22 bzw.

ein Layout eines Statorelements 12 analog den Fig. 3 und 4. Das reale Spulenlayout kann beispielsweise drei Statorempfangsspulen 22 aufweisen, die zueinander um den Winkel $\xi$ ($\xi$ =*Per* / 3 für drei Rotorempfangsspulen) verdreht sein können, der sich wie oben bereits ausgeführt berechnen lässt. Für zwei Rotorempfangsspulen lautet die Formel $\xi$ =*Per* / 4. Die Periode bzw. der Messbereich ist im vorliegenden Fall 180°.

Hier weist die Statorempfangsspule 22 vier Teilwindungen 38a, 38b auf, die im Wesentlichen eine Kreisfläche überdecken und die die Kreisfläche in vier gleich große Flächen aufteilen. Zwei bezüglich der Symmetrieachse T gegenüberliegende Teilwindungen 38a sind in eine erste Richtung orientiert, die beiden anderen Teilwindungen 38b sind in die entgegengesetzte Richtung, d.h. gegenläufig, orientiert.

Jede der Teilwindungen 38a, 38b ist genauso wie die Leiterbahnen der Fig. 3 und 4 in der ersten und zweiten Ebene der Stator-Leiterplatte 18 entlang der Punkte A bis A' geführt.

Wie weiter unten noch genauer beschrieben wird, verlaufen die äußeren Umfangsleiter 40 auf Kreisen, deren Mittelpunkte M derart von der Symmetrieachse T verschoben sind, dass die Punkte B, bei denen eine Durchkontaktierung 37 vorhanden ist, maximalen radialen Abstand haben. Die inneren Umfangsleiter 42 verlaufen rechts und links der jeweiligen Durchkontaktierung 37 auch auf Kreisen, deren Mittelpunkte (aus Gründen der Übersichtlichkeit nicht dargestellt) von der Symmetrieachse T verschoben sind, jedoch so, dass die jeweiligen Durchkontaktierungen minimalen radialen Abstand haben.

Um ein reales Layout eines Drehwinkelsensors 10 zu erzeugen, können weitere Statorempfangsspulen 22 zueinander entlang der Umfangsrichtung verdreht platziert werden. Da die einzige in den Fig. 5 und 6 dargestellte Statorempfangsspule 22 aus jeweils vier Teilwindungen 38a, 38b aufgebaut ist (die jeweils 90° des Ringbereichs 39 entlang der Umfangsrichtung der Statorsendespule 20 überdecken), sind die Statorempfangsspulen aufgrund des Messbereiches von 180° gegeneinander jeweils um 60° verschoben (siehe Fig. 6),.

Im Folgenden wird nun ein Verfahren beschrieben, mit dem das Spulenlayout für die Statorelemente 12 aus den Fig. 3 und 4 (Messbereich von 360°) und Fig. 5 und 6 (Messbereich 180°) erzeugt werden kann, aber nicht auf diese zwei Messbereiche beschränkt ist. Aus diesem Grund werden Formeln angegeben, die allgemein gültig sind.

Eine optimale Ausnutzung des Ringbereichs 39, d.h. der zwischen der äußeren Teilwindung 34a und der inneren Teilwindung 34b liegenden Fläche, kann durch eine geschickte Positionierung von mehreren Konstruktionskreisen realisiert werden, aus denen anschließend die Teilwindungen 38a, 38b der Statorempfangsspule 22 zusammengesetzt werden. Für je ein Paar radial gegenüberliegender Teilwindungen 38a, 38b (ein Paar bei der Fig. 4, zwei Paare bei der Fig. 6) werden die äußeren Umfangsleiter 40 durch zwei Konstruktionskreise definiert, die zueinander entlang der Spiegelsymmetrieachse S der beiden Teilwindungen 38a, 38b verschoben sind und deren Mittelpunkte M sich auf dieser Spiegelsymmetrieachse S befinden.

Bei mehreren Paaren (Anzahl m) von Teilwindungen 38a, 38b sind die Spiegelsymmetrieachsen S so angeordnet, dass sie jeweils um 180°/m zueinander entlang der Umfangsrichtung verschoben bzw. verdreht sind, d.h., beispielsweise stehen die beiden Spiegelsymmetrieachsen S aus der Fig. 6 orthogonal (90°) aufeinander.

Der Durchmesser der Konstruktionskreise kann etwa 1/3 des Durchmessers der Statorsendespule 20 betragen. Die Verschiebung von jeweils zwei Konstruktionskreisen zueinander kann zwischen 30% und 50% ihres Durchmessers betragen, beispielsweise 40%. Auf diese Weise kann einerseits eine maximale Flächenausnutzung gewährleistet werden und kann andererseits eine Realisierung von drei verdrehten Statorempfangsspulen 22 in zwei Ebenen ermöglicht werden.

Die Radialleiter 44, die die äußeren Umfangsleiter 40 mit den inneren Umfangsleitern 42 verbinden, verlaufen dabei radial bezüglich der Symmetrieachse T. Die Außenenden der Radialleiter 44 liegen auf den Schnittpunkten der Konstruktionskreise um die Mittelpunkte M.

Auch die inneren Umfangsleiter 42 können mit Konstruktionskreisen definiert werden, wobei pro Teilwindung 38a, 38b zwei Konstruktionskreise verwendet werden, deren Mittelpunkte entlang einer Achse orthogonal zur Spiegelsymmetrieachse S der Teilwindungen 38a, 38b verschoben sind. Dies ergibt insgesamt 4m Konstruktionskreise für die inneren Umfangsleiter 42. Der Durchmesser der Konstruktionskreise für die inneren Umfangsleiter 42 beträgt 10% bis 20% des Durchmessers der Konstruktionskreise für die äußeren Umfangsleiter 40, beispielsweise 15%.

Der Schnittpunkt der beiden Konstruktionskreise für einen inneren Umfangsleiter 42, der näher an der Symmetrieachse T liegt, definiert dabei die Position der Durchkontaktierung 37.

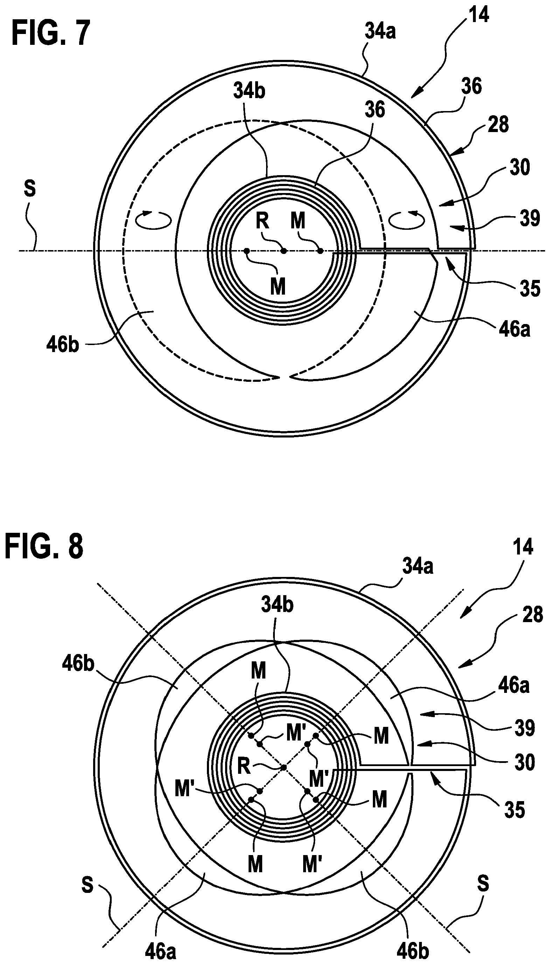

Die Fig. 7 zeigt ein Rotorelement 14 für den Drehwinkelsensor 10 aus der Fig. 1 in Draufsicht, das eine Rotorempfangsspule 28 und eine Rotorsendespule 30 umfasst und das zusammen mit dem Statorelement 12 aus den Fig. 3 und 4 verwendet werden kann.

Die eine Rotorempfangsspule 28 umfasst eine äußere Teilwindung 34a und eine innere Teilwindung 34b, die analog der Statorsendespule aus der Fig. 2 aufgebaut sein kann. Die Teilwindungen 34a, 34b der Rotorempfangsspule 28 haben dabei dieselbe Größe wie die jeweiligen Teilwindungen 34a, 34b der Statorsendespule 20 und überdecken diese.. Auch bei der Rotorempfangsspule 28 können die eingeschlossenen effektiven Flächen von links- und rechtslaufenden Leiterschleifen 36 identisch sein, um eine elektromagnetische Verträglichkeit (EMV)-Einkopplung zu unterdrücken. Grundsätzlich sind auch andere Größen und Windungszahlverhältnisse möglich. So kann z.B. die Anzahl der Leiterschleifen 36 je Teilwindung 34a, 34b auf dem Rotorelement 14 auch verschieden sein von der Anzahl der Leiterschleifen 36 der entsprechenden Teilwindung 34a, 34b auf dem Statorelement 12.

Die Rotorsendespule 30 weist zwei Teilwindungen 46a, 46b auf, die jeweils sichelförmig sind. Die erste Teilwindung 46a ist zu der zweiten Teilwindung 46b (bezüglich des Stromflusses) gegenläufig orientiert. Die Geometrien der Teilwindungen 46a, 46b können identisch sein. Die Teilwindungen 46a, 46b befinden sich in einem Ringbereich 39 der Rotorsendespule 30, der zwischen den Teilwindungen 34a, 34b angeordnet ist. Die beiden sichelförmigen Teilwindungen 46a, 46b sind aus im Wesentlichen kreisbogenförmigen Leiterabschnitten gebildet.

Die Rotorempfangsspule 28 und die Rotorsendespule 30 sind elektrisch miteinander verbunden bzw. in Reihe geschaltet. Dazu ist die Teilwindung 46a und eine der radial verlaufenden Leiterbahnen 35 der Rotorsendespule 30 in einem Bereich, wo sich diese überlappen, jeweils aufgeschnitten und über Kreuz miteinander verbunden.

In Fig. 8 ist ein Layout eines Rotorelements 14 gezeigt, das zusammen mit dem Statorelement 12 aus den Fig. 5 und 6 verwendet werden kann. In der Fig. 8 ist die Rotorsendespule 30 aus vier sichelförmigen Teilwindungen 46a, 46b aufgebaut, die die Drehachse R in Umfangsrichtung umgeben und jeweils 90° überdecken. Die bezüglich der Drehachse R gegenüberliegenden Teilwindungen 46a, 46b haben bezüglich des Stromflusses die gleiche Orientierung, während in Umfangsrichtung benachbarte Teilwindungen 46a, 46b eine gegenläufige Orientierung aufweisen.

Auch die Rotorsendespule 30 bzw. deren Teilwindungen 46a, 46b können basierend auf mehreren Konstruktionskreisen definiert werden.

Bei der Fig. 7 (Messbereich 360°) können die Teilwindungen 46a, 46b dabei durch zwei Konstruktionskreise mit gleichem Durchmesser definiert werden, deren Mittelpunkte M entlang einer Spiegelsymmetrieachse S der Teilwindungen 46a, 46b zueinander verschoben sind.

Bei der Fig. 8 werden die vier Teilwindungen 46a, 46b durch vier größere Konstruktionskreise, deren Mittelpunkte M entlang einer ersten Strecke bezüglich der Drehachse R verschoben sind und vier kleinere Konstruktionskreise, deren Mittelpunkte M' entlang einer zweiten Strecke bezüglich der Drehachse R verschoben sind, definiert. Alle Mittelpunkte M, M' befinden sich dabei auf den Spiegelsymmetrieachsen S. Es hat sich herausgestellt, dass das beste Messsignal erzielt werden kann, wenn das Verhältnis der Durchmesser der größeren und kleineren Konstruktionskreise etwa $\sqrt{2}$ ist. Vorteilhaft ist es, wenn an den Schnittpunkten benachbarter Teilwindungen 46a, 46b die Endsegmente der größeren Kreise annährend ohne Knick in die Endsegmente der benachbarten kleineren Kreise übergehen.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugzeichen in den Ansprüchen sind nicht als Einschränkung anzusehen.

**Patentansprüche**

1.  Drehwinkelsensor (10), umfassend:

    ein Statorelement (12) mit einer Statorsendespule (20) und einer Statorempfangsspule (22);
    ein bezüglich des Statorelements (12) um eine Drehachse (R) drehbar gelagertes Rotorelement (14) mit einer Rotorempfangsspule (28) und einer Rotorsendespule (30), die miteinander elektrisch verbunden sind;
    wobei die Rotorempfangsspule (28) mit der Statorsendespule (20) induktiv gekoppelt ist, so dass ein durch die Statorsendespule (20) erzeugtes elektromagnetisches Feld in der Rotorempfangsspule (28) einen Strom induziert, der durch die Rotorsendespule (30) fließt, so dass die Rotorsendespule (30) ein weiteres elektromagnetisches Feld erzeugt;
    wobei die Statorempfangsspule (22) mit der Rotorsendespule (30) induktiv gekoppelt ist, so dass die induktive Kopplung von einem Drehwinkel zwischen dem Statorelement (12) und dem Rotorelement (14) abhängig ist, und das von der Rotorsendespule (30) erzeugte weitere elektromagnetische Feld in der Statorempfangsspule (22) eine winkelabhängige Wechselspannung induziert;
    **dadurch gekennzeichnet, dass**
    die Statorsendespule (20) eine kreisförmige äußere Teilwindung (34a) und eine kreisförmige innere Teilwindung (34b) aufweist, die innerhalb der äußeren Teilwindung (34a) angeordnet ist und die mit der äußeren Teilwindung (34a) derart elektrisch verbunden ist, dass sie bezüglich eines Stromflusses zur äußeren Teilwindung (34a) gegenläufig orientiert ist;
    die Rotorempfangsspule (28) eine kreisförmige äußere Teilwindung (34a) und eine kreisförmige innere Teilwindung (34b) aufweist, die innerhalb der äußeren Teilwindung (34a) angeordnet ist und die mit der äußeren Teilwindung (34a) derart elektrisch verbunden ist, dass sie bezüglich eines Stromflusses zur äußeren Teilwindung (34a) gegenläufig orientiert ist;
    wobei die äußere Teilwindung (34a) der Statorsendespule (20) und die äußere Teilwindung (34a) der Rotorempfangsspule (28) zueinander ausgerichtet sind;
wobei die innere Teilwindung (34b) der Statorsendespule (20) und die innere Teilwindung (34b) der Rotorempfangsspule (28) zueinander ausgerichtet sind.

2.  Drehwinkelsensor (10) nach Anspruch 1,
wobei die äußere Teilwindung (34a) und die innere Teilwindung (34b) der Statorsendespule (20) derart ausgeführt sind, dass sie im Wesentlichen den gleichen magnetischen Fluss erzeugen,
und/oder
wobei die äußere Teilwindung (34a) und die innere Teilwindung (34b) der Rotorempfangsspule (28) derart ausgeführt sind, dass sie im Wesentlichen den gleichen magnetischen Fluss erzeugen.

3.  Drehwinkelsensor (10) nach Anspruch 1 oder 2,
wobei die äußere Teilwindung (34a) der Statorsendespule (20) und/oder der Rotorempfangsspule (28) eine Mehrzahl von Leiterschleifen (36) aufweisen, die jeweils das Statorelement (12) bzw. das Rotorelement (14) komplett umrunden; und/oder
wobei die innere Teilwindung (34b) der Statorsendespule (20) und/oder der Rotorempfangsspule (28) eine Mehrzahl von Leiterschleifen (36) aufweisen, die jeweils das Statorelement (12) bzw. das Rotorelement (14) komplett umrunden.

4.  Drehwinkelsensor (10) nach Anspruch 3,
wobei eine effektive Fläche der äußeren Teilwindung (34a) der Statorsendespule (20), die einer Summe der von deren Leiterschleifen (36) aufgespannten Flächen entspricht, einer effektiven Fläche der inneren Teilwindung (34b) der Statorsendespule (20) im Wesentlichen entspricht, und/oder
wobei eine effektive Fläche der äußeren Teilwindung (34a) der Rotorempfangsspule (28), die einer Summe der von deren Leiterschleifen aufgespannten Flächen entspricht, einer effektiven Fläche der inneren Teilwindung (34b) der Rotorempfangsspule (28) im Wesentlichen entspricht.

5.  Drehwinkelsensor (10) nach einem der vorhergehenden Ansprüche,
wobei die äußere Teilwindung (34a) der Statorsendespule (20) und/oder der Rotorempfangsspule (28) eine Mehrzahl von Leiterschleifen (36) aufweist, die, insbesondere um eine Symmetrieachse (T) des Statorelements (12) bzw. die Drehachse (R) betrachtet, eine Spirale bilden; und/oder
wobei die innere Teilwindung (34a) der Statorsendespule (20) und/oder der Rotorempfangsspule (28) eine Mehrzahl von Leiterschleifen (36) aufweist, die, insbesondere um eine Symmetrieachse (T) des Statorelements (12) bzw. die Drehachse (R) betrachtet, eine Spirale bilden.

6.  Drehwinkelsensor (10) nach einem der vorhergehenden Ansprüche,
wobei die äußere Teilwindung (34a) und die innere Teilwindung (34b) der Statorsendespule (20) und/oder der Rotorempfangsspule (28) konzentrisch zu einer/der Symmetrieachse (T) der Statorsendespule (20) bzw. der Drehachse (R) angeordnet sind.

7.  Drehwinkelsensor (10) nach einem der vorhergehenden Ansprüche,
wobei die Statorsendespule (20) und/oder die Rotorempfangsspule (28) als planare Spulen in der Form von Leiterbahnen auf einer Leiterplatte (18, 26) ausgeführt sind.

8.  Drehwinkelsensor (10) nach einem der vorhergehenden Ansprüche,
wobei die Statorempfangsspule (22) in einem Ringbereich (39) des Statorelements (12) angeordnet ist, der radial außen von der äußeren Teilwindung (34a) und radial innen von der inneren Teilwindung (34b) der Statorsendespule (20) begrenzt ist; und/oder
wobei die Statorempfangsspule eine Mehrzahl von bezüglich eines Stromflusses gegenläufig orientierten Teilwindungen aufweist.

9.  Drehwinkelsensor (10) nach einem der vorhergehenden Ansprüche,
wobei die Rotorsendespule (30) in einem Ringbereich (39) des Rotorelements (14) angeordnet ist, der radial außen von der äußeren Teilwindung (34a) und radial innen von der inneren Teilwindung (34b) begrenzt ist;
wobei die Rotorsendespule (30) eine Mehrzahl von bezüglich eines Stromflusses gegenläufig orientierten Teilwindungen (46a, 46b) aufweist.

10. Drehwinkelsensor (10) nach einem der vorhergehenden Ansprüche,

wobei die Statorempfangsspule (22) einen Empfangsringbereich (39) komplett überdeckt;
wobei die Rotorsendespule (30) eine Mehrzahl von sichelförmigen Teilwindungen (46a, 46b) aufweist, die dem Empfangsringbereich (38) gegenüberliegen.

## Claims

1. Rotational angle sensor (10), comprising:

   a stator element (12) with a stator transmitting coil (20) and a stator receiving coil (22);
   a rotor element (14), rotatably mounted about an axis of rotation (R) with respect to the stator element (12), having a rotor receiving coil (28) and a rotor transmitting coil (30), which are electrically connected to one another;
   wherein the rotor receiving coil (28) is inductively coupled to the stator transmitting coil (20) such that an electromagnetic field produced by the stator transmitting coil (20) induces a current in the rotor receiving coil (28), said current flowing through the rotor transmitting coil (30) such that the rotor transmitting coil (30) produces a further electromagnetic field;
   wherein the stator receiving coil (22) is inductively coupled to the rotor transmitting coil (30) such that the inductive coupling depends on a rotational angle between the stator element (12) and the rotor element (14) and the further electromagnetic field produced by the rotor transmitting coil (30) induces an angle-dependent AC voltage in the stator receiving coil (22);
   **characterized in that**
   the stator transmitting coil (20) has a circular outer partial winding (34a) and a circular inner partial winding (34b), which is arranged within the outer partial winding (34a) and which is electrically connected to the outer partial winding (34a) in such a way that it is oriented in the opposite sense to the outer partial winding (34a) in respect of a current flow;
   the rotor receiving coil (28) has a circular outer partial winding (34a) and a circular inner partial winding (34b), which is arranged within the outer partial winding (34a) and which is electrically connected to the outer partial winding (34a) in such a way that it is oriented in the opposite sense to the outer partial winding (34a) in respect of a current flow;
   wherein the outer partial winding (34a) of the stator transmitting coil (20) and the outer partial winding (34a) of the rotor receiving coil (28) are aligned in relation to one another;
   wherein the inner partial winding (34b) of the stator transmitting coil (20) and the inner partial winding (34b) of the rotor receiving coil (28) are aligned in relation to one another.

2. Rotational angle sensor (10) according to Claim 1, wherein the outer partial winding (34a) and the inner partial winding (34b) of the stator transmitting coil (20) are embodied in such a way that they produce substantially the same magnetic flux,
   and/or
   wherein the outer partial winding (34a) and the inner partial winding (34b) of the rotor receiving coil (28) are embodied in such a way that they produce substantially the same magnetic flux.

3. Rotational angle sensor (10) according to Claim 1 or 2,
   wherein the outer partial winding (34a) of the stator transmitting coil (20) and/or of the rotor receiving coil (28) have a plurality of conductor loops (36), which each completely circuit the stator element (12) or the rotor element (14);
   and/or
   wherein the inner partial winding (34b) of the stator transmitting coil (20) and/or of the rotor receiving coil (28) have a plurality of conductor loops (36), which each completely circuit the stator element (12) or the rotor element (14).

4. Rotational angle sensor (10) according to Claim 3, wherein an effective area of the outer partial winding (34a) of the stator transmitting coil (20), which corresponds to a sum of the areas spanned by its conductor loops (36), substantially corresponds to an effective area of the inner partial winding (34b) of the stator transmitting coil (20),
   and/or
   wherein an effective area of the outer partial winding (34a) of the rotor receiving coil (28), which corresponds to a sum of the areas spanned by its conductor loops, substantially corresponds to an effective area of the inner partial winding (34b) of the rotor receiving coil (28) .

5. Rotational angle sensor (10) according to any one of the preceding claims,
   wherein the outer partial winding (34a) of the stator transmitting coil (20) and/or of the rotor receiving coil (28) has a plurality of conductor loops (36), which form a spiral, in particular when observed about an axis of symmetry (T) of the stator element (12) or about the axis of rotation (R); and/or
wherein the inner partial winding (34a) of the stator transmitting coil (20) and/or of the rotor receiving coil (28) has a plurality of conductor loops (36), which form a spiral, in particular when observed about an axis of symmetry (T) of the stator element (12) or about the axis of rotation (R).

6.  Rotational angle sensor (10) according to any one of the preceding claims,
    wherein the outer partial winding (34a) and the inner partial winding (34b) of the stator transmitting coil (20) and/or the rotor receiving coil (28) are arranged concentrically to an/the axis of symmetry (T) of the stator transmitting coil (20) or the axis of rotation (R) .

7.  Rotational angle sensor (10) according to any one of the preceding claims,
    wherein the stator transmitting coil (20) and/or the rotor receiving coil (28) are embodied as planar coils in the form of conductor tracks on a printed circuit board (18, 26).

8.  Rotational angle sensor (10) according to any one of the preceding claims,
    wherein the stator receiving coil (22) is arranged in a ring region (39) of the stator element (12), which is delimited radially to the outside by the outer partial winding (34a) and radially to the inside by the inner partial winding (34b) of the stator transmitting coil (20); and/or
    wherein the stator receiving coil has a multiplicity of partial windings oriented in the opposite sense in respect of a current flow.

9.  Rotational angle sensor (10) according to any one of the preceding claims,
    wherein the rotor transmitting coil (30) is arranged in a ring region (39) of the rotor element (14), which is delimited radially to the outside by the outer partial winding (34a) and radially to the inside by the inner partial winding (34b);
    wherein the rotor transmitting coil (30) has a multiplicity of partial windings (46a, 46b) oriented in the opposite sense in respect of a current flow.

10. Rotational angle sensor (10) according to any one of the preceding claims,
    wherein the stator receiving coil (22) completely covers a receiving ring region (39);
    wherein the rotor transmitting coil (30) has a plurality of sickle-shaped partial windings (46a, 46b), which lie opposite to the receiving ring region (38).

**Revendications**

1.  Capteur d'angle de rotation (10) comprenant :

    un élément de stator (12) pourvu d'une bobine d'émission de stator (20) et d'une bobine de réception de stator (22) ;
    un élément de rotor (14) monté de manière rotative par rapport à l'élément de stator (12) sur un axe de rotation (R) et pourvu d'une bobine de réception de rotor (28) et d'une bobine d'émission de rotor (30) qui sont reliées électriquement l'une à l'autre ;
    la bobine de réception de rotor (28) étant couplée par induction à la bobine d'émission de stator (20) de sorte qu'un champ électromagnétique généré par la bobine d'émission de stator (20) induise dans la bobine de réception de rotor (28) un courant qui circule à travers la bobine d'émission de rotor (30) de sorte que la bobine d'émission de rotor (30) génère un autre champ électromagnétique ;
    la bobine de réception de stator (22) étant couplée par induction à la bobine d'émission de rotor (30) de sorte que le couplage inductif dépende d'un angle de rotation entre l'élément de stator (12) et l'élément de rotor (14), et l'autre champ électromagnétique généré par la bobine d'émission de rotor (30) induisant dans la bobine de réception de stator (22) une tension alternative dépendant de l'angle ;
    **caractérisé en ce que**
    la bobine d'émission de stator (20) comporte une partie d'enroulement extérieure circulaire (34a) et une partie d'enroulement intérieure circulaire (34b) qui est disposée à l'intérieur de la partie d'enroulement extérieure (34a) et qui est reliée électriquement à la partie d'enroulement extérieure (34a) de façon à être orientée dans le sens opposé à un flux de courant vers la partie d'enroulement extérieure (34a) ;
    la bobine de réception de rotor (28) comporte une partie d'enroulement extérieure circulaire (34a) et une partie d'enroulement intérieure circulaire (34b) qui est disposée à l'intérieur de la partie d'enroulement extérieure (34a) et qui est reliée électriquement à la partie d'enroulement extérieure (34a) de façon à être orientée dans le sens opposé à un flux de courant vers la partie d'enroulement extérieure (34a) ;

la partie d'enroulement extérieure (34a) de la bobine d'émission de stator (20) et la partie d'enroulement extérieure (34a) de la bobine de réception de rotor (28) étant orientées l'une par rapport à l'autre ;

la partie d'enroulement intérieure (34b) de la bobine d'émission de stator (20) et la partie d'enroulement intérieure (34b) de la bobine de réception de rotor (28) étant orientées l'une par rapport à l'autre.

2. Capteur d'angle de rotation (10) selon la revendication 1,
la partie d'enroulement extérieure (34a) et la partie d'enroulement intérieure (34b) de la bobine d'émission de stator (20) étant conçues de façon à générer sensiblement le même flux magnétique, et/ou
la partie d'enroulement extérieure (34a) et la partie d'enroulement intérieure (34b) de la bobine de réception de rotor (28) étant conçues de façon à générer sensiblement le même flux magnétique.

3. Capteur d'angle de rotation (10) selon la revendication 1 ou 2,
la partie d'enroulement extérieure (34a) de la bobine d'émission de stator (20) et/ou de la bobine de réception de rotor (28) comportant une pluralité de boucles de conducteur (36) qui entourent chacune complètement l'élément de stator (12) ou l'élément de rotor (14) ; et/ou
la partie d'enroulement intérieure (34b) de la bobine d'émission de stator (20) et/ou de la bobine de réception de rotor (28) comportant une pluralité de boucles de conducteur (36) qui entourent chacune complètement l'élément de stator (12) ou l'élément de rotor (14).

4. Capteur d'angle de rotation (10) selon la revendication 3,
une surface effective de la partie d'enroulement extérieure (34a) de la bobine d'émission de stator (20), qui correspond à une somme des surfaces couvertes par les boucles de conducteur (36) de celle-ci, correspondant sensiblement à une surface effective de la partie d'enroulement intérieure (34b) de la bobine d'émission de stator (20), et/ou
une surface effective de la partie d'enroulement extérieure (34a) de la bobine de réception de rotor (28), qui correspond à une somme des surfaces couvertes par les boucles de conducteur de celle-ci, correspondant sensiblement à une surface effective de la partie d'enroulement intérieure (34b) de la bobine de réception de rotor (28).

5. Capteur d'angle de rotation (10) selon l'une des revendications précédentes,
la partie d'enroulement extérieure (34a) de la bobine d'émission de stator (20) et/ou de la bobine de réception de rotor (28) comportant une pluralité de boucles de conducteur (36) qui forment une spirale, en particulier lorsque l'on observe autour d'un axe de symétrie (T) de l'élément de stator (12) ou de l'axe de rotation (R) ; et/ou
la partie d'enroulement intérieure (34a) de la bobine d'émission de stator (20) et/ou de la bobine de réception de rotor (28) comportant une pluralité de boucles de conducteur (36) qui forment une spirale, en particulier lorsque l'on observe autour d'un axe de symétrie (T) du l'élément de stator (12) ou de l'axe de rotation (R).

6. Capteur d'angle de rotation (10) selon l'une des revendications précédentes,
la partie d'enroulement extérieure (34a) et la partie d'enroulement intérieure (34b) de la bobine d'émission de stator (20) et/ou de la bobine de réception de rotor (28) étant disposées concentriquement à un axe de symétrie (T) de la bobine d'émission de stator (20) ou l'axe de rotation (R).

7. Capteur d'angle de rotation (10) selon l'une des revendications précédentes,
la bobine d'émission de stator (20) et/ou la bobine de réception de rotor (28) étant conçues comme des bobines planes se présentant sous la forme de pistes conductrices sur une carte de circuit imprimé (18, 26).

8. Capteur d'angle de rotation (10) selon l'une des revendications précédentes,
la bobine de réception de stator (22) étant disposée dans une région annulaire (39) de l'élément de stator (12) qui est délimitée radialement à l'extérieur par la partie d'enroulement extérieure (34a) et radialement vers l'intérieur par la partie d'enroulement intérieure (34b) de la bobine d'émission de stator (20) ; et/ou
la bobine de réception de stator comportant une pluralité de parties d'enroulement orientées dans des sens opposés par rapport à un flux de courant.

9. Capteur d'angle de rotation (10) selon l'une des revendications précédentes,
la bobine d'émission de rotor (30) étant disposée dans une région annulaire (39) de l'élément de rotor (14) qui est délimitée radialement à l'extérieur par la partie d'enroulement extérieure (34a) et radialement à l'intérieur par la partie d'enroulement intérieure (34b) ;
la bobine d'émission de rotor (30) comportant une pluralité de parties d'enroulement (46a, 46b) orientées dans des sens opposés par rapport à un flux de courant.

10. Capteur d'angle de rotation (10) selon l'une des revendications précédentes,
    la bobine de réception de stator (22) recouvrant complètement une région de réception annulaire (39) ;
    la bobine d'émission de rotor (30) comportant une pluralité de parties d'enroulement falciforme (46a, 46b) qui sont situées à l'opposé de la région de réception annulaire (38).

# FIG. 1

# FIG. 2

FIG. 3

FIG. 4

# FIG. 5

# FIG. 6

# FIG. 7

# FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0909955 B1
- DE 102008012922 A1
- EP 2570776 A2
- US 20090153344 A1